Europäisches Patentamt

European Patent Office

Office européen des brevets

(11) Publication number: **0 485 002 A1**

# EUROPEAN PATENT APPLICATION

(21) Application number: **91202745.5**

(22) Date of filing: **23.10.91**

(51) Int. Cl.⁵: **F16F 15/26**

(30) Priority: **09.11.90 NL 9002449**

(43) Date of publication of application:
**13.05.92 Bulletin 92/20**

(84) Designated Contracting States:
**AT BE CH DE ES FR GB IT LI NL SE**

(71) Applicant: **Volvo Car B.V.**
**Steenovenweg 1**
**NL-5708 HN Helmond(NL)**

(72) Inventor: **Van der Linden, Petrus Johannes**
**Gerardus**
**Asberg 25**
**NL-5508 DC Veldhoven(NL)**

(74) Representative: **Timmermans, Anthonius**
**C.Th., Ir. et al**
**European Patent Attorneys Octrooibureau**
**Zuid P.O. Box 2287**
**NL-5600 CG Eindhoven(NL)**

(54) **Device for counterbalancing forces and moments out of balance caused by an internal combustion engine.**

(57) Device (1) for counterbalancing unbalancing forces and unbalancing moments caused by an internal combustion engine (2), which device (1), together with the internal combustion engine (2) and a possible transmission (14) coupled to the said internal combustion engine (2) and further usual components such as an oil pump, carburetor, etc., can be suspended as a propulsion unit from chassis fixing-points $M_1$, $M_2$, $M_3$, the said device (1) containing balancing means (7, 8; 7', 8'; 7'', 8''; 7''', 8'''), whereby the mass and location of the balancing means (7, 8; 7', 8'; 7'', 8''; 7''', 8''') are determined in such a manner that a fraction $\alpha$ of the unbalancing forces and unbalancing moments is compensated by the balancing means (7, 8; 7', 8'; 7'', 8''; 7''', 8'''), the value of $\alpha$ being derived from a calculation of the minimum of the quadratic sum of the weighted pushing forces $F_{gi}$ excerted by the propulsion unit on the chassis fixing-points $M_1$, $M_2$, $M_3$.

FIG. 2

Rank Xerox (UK) Business Services
(-/2.18/2.0)

The invention concerns a device for counterbalancing unbalancing forces and moments caused by an internal combustion engine, which device, together with an internal combustion engine, a possible transmission coupled to the internal combustion engine and further common components such as an oil pump, carburetor, etc., can be mounted as a propulsion unit on chassis fixing-points and which device contains balancing means.

Such a device is known from patent script DE 2455667, in which balancing-shafts are mounted parallel to the crankshaft on either side of a four-cylinder engine. The balancing-shafts are longitudinal shafts and are applied at horizontal distances $x_1$ and $x_2$ from the longitudinal plane through the crankshaft and camshaft such that the balancing-shafts are separated from each other by a vertical distance y. It is the aim of the known device not only to eliminate the second-order unbalancing forces but also to achieve a minimisation of the second-order moments. The sum of the three second-order moments - namely a first moment due to the backward-and-forward moving masses, a second moment due to the combustion-pressure and a third moment associated with the motion of the balancing-shafts - is minimised as a function of $x_1$, $x_2$ and y. The minimum is achieved if $x_1$ is equal to $x_2$ and y is equal to three quarters of the length of the crankshaft. This also leads to minimisation of vibrations in the engine.

The disadvantage of the known device is that the engine, and especially the balancing-shafts mounted on either side of the engine, occupy a lot of space in what is already a cramped engine compartment. Above all, the balancing-shafts must be placed at an accurately predetermined vertical distance from each other.

The aim of the invention is the provision of a device which occupies less space, in which the placement and propulsion of the balancing-shafts provides greater freedom of application and which also possesses the option of keeping vibrations in the foundation to a minimum. Such a device is not only space-saving but also simple in construction and, thus, can be produced more economically. In addition, the frictional losses are smaller. Moreover, it is the intention to expand the field of application of the known devices and to make these suitable also for counterbalancing engines with, for example, 2 or 5 cylinders in, for example, an in-line configuration or V-configuration. To this end, the device according to the invention is characterised by the fact that the mass and position of the balancing means are determined in such a way that a fraction $\alpha$ of the unbalancing forces and moments is compensated by the balancing means, the value of $\alpha$ being derived from calculation of the minimum of the quadratic sum of the weighted pushing forces $F_{gi}$ exerted by the propulsion unit on the chassis fixing-points.

The advantage of the device according to the invention is that a partial limitation of the unbalance in the form of unbalancing forces and unbalancing moments now occurs together with a minimum of the quadratic sum of the weighted pushing forces exerted by the propulsion unit on the chassis fixing-points. The quadratic sum is a measure of the total audio load or vibrational load transferred to the chassis of the vehicle via the chassis fixing-points; it plays a role in determining the noise-level, and thus the comfort, during operation of the engine - especially at high revolution-rates. Minimisation of the quadratic sum also implies a minimisation of the noise-level and vibration-level as experienced (in particular) by occupants of the vehicle.

Above all, the present invention forms the basis of a new concept whereby the internal combustion engine is not seen as an independently stationed vibrating propulsion unit whose oscillatory forces and moments (arising from its operation) should be eliminated. Rather, allowance is made for the fact that the propulsion unit also comprises a transmission -continuous, variable or manual, for example - and a clutch, as well as other usual components, all of which are influential in determining, for example, the position of the centre of gravity of the propulsion unit and the manner in which the unbalances caused by the engine are transferred to the chassis of the vehicle, where they become observable and feelable for the vehicle's occupants, the said transfer occurring via the moving propulsion unit (whose motion is attributed to the said unbalances) and via the collective chassis fixing-points (located at certain positions).

Of particular advantage is the fact that application of the current invention can, in principe, be extended, for example, to engines having 2, 3, 4, 5 or more cylinders, in an in-line or non in-line configuration or, for example, a V-configuration. Application is also possible in ship engines and gas-driven engines, for example.

The balancing means are preferably placed either on the distributor-side or the transmission-side of the engine so that the engine fitted with the device can remain narrow, this leading to space-saving in the motor compartment on both sides of the engine and, thus, greater freedom-of-placement for the other components in the motor compartment.

In one embodiment of the device according to the invention, the balancing means are located for the most part between the crankshaft and the camshaft on the distributor-side of the engine.

The advantage of the embodiment of the device according to the invention is that it allows unbalancing forces to be compensated in a relatively easy manner. Because the point of action of the unbalancing forces is in the middle of the crankshaft between the centre of gravity of the internal combustion engine and balancing means mounted on the distributor-side (whereby the balancing forces for compensation of the unbalancing forces need therefore amount to only a fraction of the mass forces caused by the unbalance), the ball bearings (in particular) of the balancing means are placed under less load and, thus, can afford to be of less robust constitution.

An additional moment arises due to the fact that the balancing force acts (in this case) on the distributor-side of the engine and the unbalancing force acts on the middle of the crankshaft, the said additional moment having a direction which lies in a plane perpendicular to the direction of the crankshaft. The presence of this "offset" makes it possible to compensate an unbalancing moment in this plane (which compensation is of importance in certain types of engine) without influencing moments in the direction of the crankshaft as a result. As a consequence of the arisal of the extra moment, it also becomes possible (using the said moment) to adapt the distribution of vibration levels which occur in the chassis fixing-points (mounted on a chassis-foundation) or engine-supports to the characteristics of the engine-supports, thereby making it possible to achieve a further minimisation of vibration of the foundation.

A further embodiment of the device according to the invention is characterised by the fact that the balancing means are located on one side of a plane through which both the crankshaft and the camshaft of the internal combustion engine run.

By putting the balancing means together on the same side of this plane, and by arranging for each pair of balancing means to rotate in mutually opposite directions with twice the angular velocity of the crankshaft, a pure, non-rotary force arises which, via its associated extra moment, provides yet another opportunity to adapt the distribution of forces to the characteristics of the engine-supports, remembering to make allowances for (for example) the type, the loadability and the individually different contributions which vibrations in each of the engine-supports make to the audio load or vibrational load on the chassis (in particular) or the vehicle's interior.

A further embodiment of the device according to the invention is characterised by the fact that the crankshaft and the camshaft of the internal combustion engine are each provided with pulleys around which a belt is fitted, the said belt having at least one toothed side which grips the balancing means.

The advantage of this further embodiment of the device according to the invention is that, by positioning the balancing means appropriately with respect to each other (said balancing means consisting either of balancing wheels, balancing cogs or balancing shafts), it becomes unnecessary to apply a tensioning organ (as is generally present - a tensioning wheel or a chain-tensioning device, for example) in order to tension the said belt or an equivalent distributor-chain.

A further embodiment of the device according to the invention requires only a very small part of the room present in the engine compartment and is characterised by the fact that the camshaft of a hollow pulley mounted on the distributor-side of the internal combustion engine is provided with internal toothing, the said toothing being coupled to balancing means which are mounted in bearings in the engine-block so as to be rotatable and which are provided with pairs of balancing cogs.

The invention and its associated further advantages will be further elucidated with the aid of the drawing. In the said drawing, corresponding elements will be provided with the same reference numbers. The contents of the figures are as follows:

figure 1 shows a known device for counterbalancing unbalancing forces and moments of second order caused by an internal combustion engine;

figure 2 depicts a view of the distributor-side in the case of a first possible embodiment of the device according to the invention;

figure 3 depicts a view of the distributor-side of a second possible embodiment of the device according to the invention;

figure 4 depicts a view of the distributor-side of a third possible embodiment of the device according to the invention.

figure 5 shows a schematic (transverse) cross-section of (in particular) the support-points of the engine/transmission suspension, and will be used in the further elucidation of the means by which a minimal audio loading of the foundations of the suspension can be achieved.

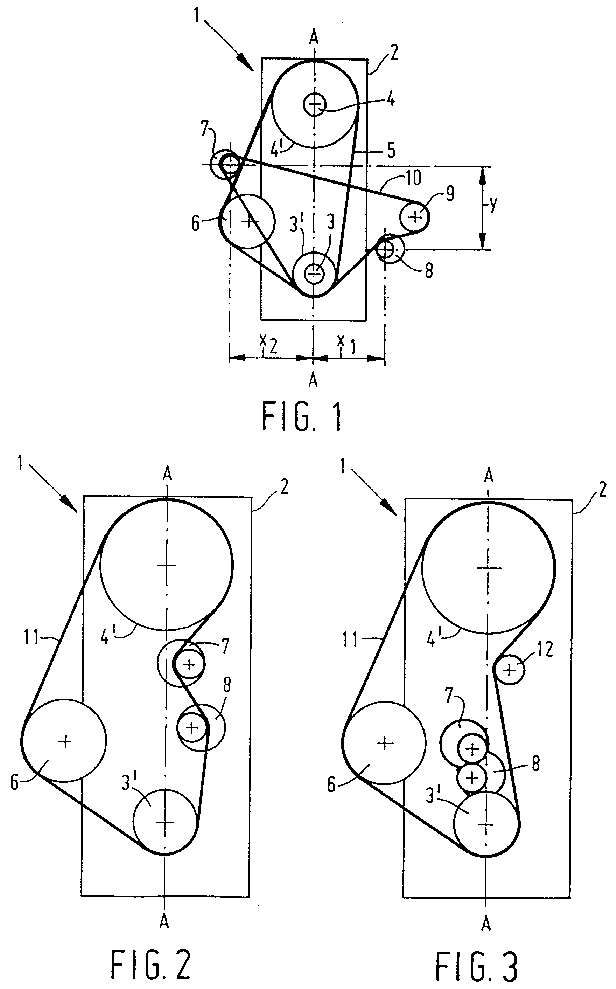

Figure 1 shows an elevation of the distributor-side of a known device 1 for the counterbalancing of unbalancing forces and moments of second order caused by an internal combustion engine 2. The engine 2 possesses a crankshaft 3, and a camshaft 4 which is depicted in the figure. The camshaft 4 is coupled to the crankshaft 3 via a belt 5 in such a manner that it can be driven, the said belt 5 passing around a pulley 6 for the driving of further means which are not further depicted. The belt 5, which can also be embodied as a distributor chain, passes around pulleys 3' and 4' which are mounted on the shafts 3 and 4.

A longitudinal plane AA perpendicular to the plane of figure 1 passes through the crankshaft 3 and the camshaft 4. On either side of the said plane AA, balancing means in the form of balancing-shafts 7 and 8 are mounted at respective distances $x_1$ and $x_2$ from the plane AA and at a mutual vertical separation y. The balancing-shafts 7 and 8 are driven by the crankshaft 3 via a belt 10 which passes around an additional pulley 9. The known device 1 occupies a lot of space because of the fact that the balancing-shafts 7 and 8 are embodied as longitudinal shafts and, as such, protrude outside the contours of the engine 2.

Figures 2 to 4 inclusive depict embodiments of a device 1 which are narrower. Each of these depicted embodiments contains only one belt 11.

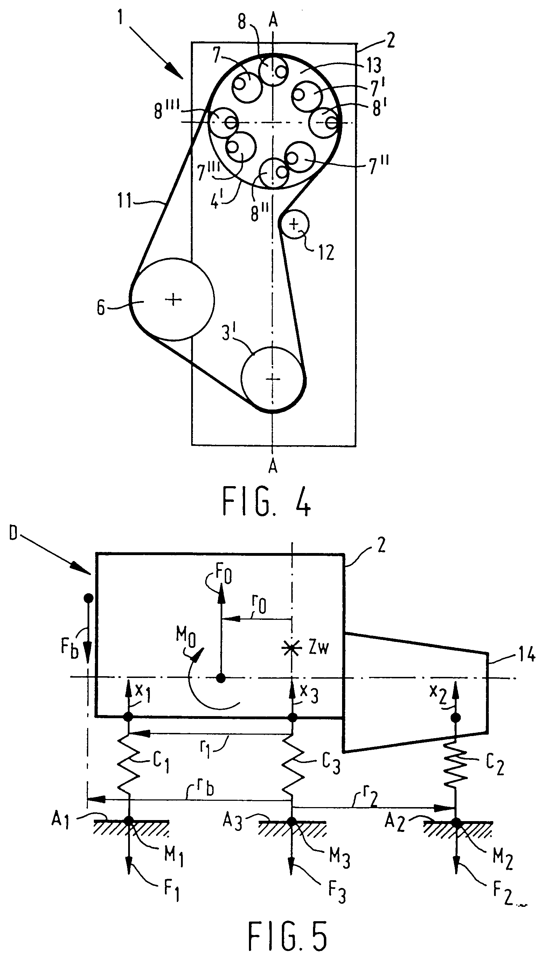

The embodiment of the device 1 which is depicted in figure 2 contains balancing means which are mounted on either side of the belt 11, the said balancing means being embodied as two relatively short shafts 7 and 8. In this embodiment, it is unnecessary to apply a tensioning-pulley 12 (see figures 3 and 4) in order to maintain tension in the belt or distributor-chain 11 for an appropriate positioning of the balancing-shafts. The short balancing-shafts 7 and 8 are embodied with balancing-wheels which are located only on the depicted distributor-side of the engine 2. This is in contrast to the balancing-shafts 7 and 8 depicted in figure 1 which are embodied as longitudinal shafts extending alongside the engine 2. The balancing-wheels or balancing-cogs can be easily mounted in bearings at the depicted distributor-side or, for example, the oppositely situated transmission-side of the engine 2. In the embodiments in figures 2 and 3, the balancing-wheels are mounted principally between the crankshaft 3 and the camshaft 4. In the embodiment in figure 2, balancing-wheel 7 in particular is located close to the plane AA, whereas, in the embodiment in figure 3, both balancing-wheels lie very close to or even in the plane AA, thus making a subtle compensation of unbalances possible. In figure 2, the balancing-wheels are mounted on only one side of the plane AA. In the embodiment in figure 3, the pulley 3' and the balancing-shafts 7 and 8 shall be provided with a fitting cog transmission for direct driving of the balancing-cogs.

Figure 4 depicts an embodiment of the device 1 which, from the point of view of space-saving, is very advantageous and which is provided with a hollow pulley 13 mounted on the camshaft. The pulley 13 is provided with an internal toothing (which is not depicted) for driving the pairs of balancing-cogs 7 and 8, 7' and 8', 7'' and 8'', 7''' and 8''' which, in the depicted case, are mounted in bearings at the distributor-side of the engine 2. These pairs of balancing-cogs will also be provided with corresponding toothings which are coupled to the internal toothing of the pulley 13 for the purpose of driving the pairs of balancing-cogs.

Figure 5 depicts a longitudinal cross-section of the engine 2, to which engine a transmission 14 is coupled. The engine 2, together with the transmission 14 and other usual components (not depicted in the figure) such as a water pump and, for example, oil filter, air filter, carburetor etc., is suspended from the chassis fixing-points $M_1$, $M_2$ and $M_3$. The fixing-points are (at the least) provided with elastic elements with dynamic moduli of elasticity $C_1$, $C_2$ and $C_3$. Fixing-point $M_1$ is located at a distance $r_1$ from a centre of gravity Zw and $M_2$ is located at a distance $r_2$ from Zw. Forces $F_1$, $F_2$ and $F_3$ arise in the different points. The points possess successive acoustic sensitivity factors $A_1$, $A_2$ and $A_3$. The respective displacements at the fixing-points are denoted by $x_1$, $x_2$ and $x_3$. A force $F_0$ acts at a distance $r_0$ from the centre of gravity Zw, this force representing the unbalancing force which acts at the middle of the crankshaft (which crankshaft is schematically depicted by a broken line) A force $F_b$ acts at the end of the crankshaft on the distributor-side D of the engine 2, which force arises as a result of the rotating balancing means as depicted in figures 2, 3 and 4. If we define:

$$F_b = \alpha.F_0$$

and further denote the mass of the engine by M and the moment of inertia of the engine by J, then expressions for the one-dimensional displacement $x_i$ of the engine at the fixing-point i apply in the following example, the said expressions receiving further elucidation later on and being simplified so as to ease calculations.

Moreover, if we define (respectively) the weighted pushing force $F_{gi}$ exerted by fixing-point i on the foundation and the quadratic sum $F_{gtkw}$ according to:

$$F_{gi} = A_i.C_i.x_i \text{ and}$$
$$F_{gtkw} = {}_i\Sigma\ F_{gi}^2$$

then $F_{gtkw}$ can be optimised as a function of $\alpha$ by setting:

$$d\ F_{gtkw}\ /\ d\alpha = 0$$

Here, $F_{gtkw}$ represents the total effective pushing force on the foundation and is obtained from the quadratically summed weighted forces $F_{gi}$. In practical situations, the total effective pushing forec is minimal for values of $\alpha$ which are smaller than 1.

As a result, the force $F_b$ is smaller than the force $F_0$, so that the mounting in bearings of the balancing means 7 and 8 is subject to less exacting demands. Because the value of $\alpha$ is derived from the minimum of the total effective pushing force, the force $F_b$ will have such a value as to give rise, together with the force $F_0$, to an extra moment, which moment shall lie in a plane perpendicular to the drawing i.e. perpendicular to the length-axis of the crankshaft 3. This extra moment can be made variable by fitting choice of the moduli of elasticity $C_1$, $C_2$ and $C_3$ and choice of $r_1$ and $r_2$.

Further unbalances can be corrected either by influencing the mutual vertical distances between the balancing means 7 and 8 in the embodiments in figures 2 and 3 or by adjusting the individual horizontal distances from the balancing means 7 and 8 to the plane AA. Any further unbalance can be corrected by influencing the positions which the balancing means 7 and 8 collectively adopt along the line AA.

Example 1

Assuming the validity of the elementary equations, the following expression is found for the displacment $x_i$ in the case of a given unbalancing force $F_0$:

$$x_i = w^{-2} [(F_0 - F_b) M^{-1} + (F_0 r_0 - F_b r_b) r_i J^{-1}],$$

where w represents the angular velocity of the engine.

Given the aforementioned definitions and assuming a simplified case whereby the values of the relevant parameters are:

$A_3 = 2 A_1 = 2 A_2 = 2$,
$C_1 = C_2 = 1.5 \times 10$ [N/m], $C_3 = 2 \times 10^5$ [N/m],
$r_1 = r_2 = 0.3$ [m], $r_3 = 0$ [m],
$r_b = 4 r_0 = 0.4$ [m],
$M = 180$ [kg], $J = 10$ [kg m$^2$],

it follows that, after optimisation:

$\alpha = 0.621$,

whereby the total weighted effective force appears to be limited by an approximate factor 4 (6 dB thus) by addition of the balancing force.

Example 2

Assuming the validity of the elementary equations, the following expression is found for the displacement $x_i$ in the case of a given unbalancing moment $M_0$:

$$x_i = w^{-2} [F_b M^{-1} + (M_0 - F_b r_b) r_i J^{-1}], M_0 = F_0 r_0,$$

where w again represents the angular velocity of the engine.

Given the aforementioned definitions and assuming a simplified case whereby the values of the relevant parameters are:

$A_3 = 2 A_1 = 2 A_2 = 2$,
$C_1 = C_2 = 2 \times 10^5$ [N/m], $C_3 = 2.5 \times 10^5$ [N/m],
$r_1 = 0.4$ [m], $r_2 = -0.3$ [m], $r_3 = 0$ [m],
$r_0 = 0.15$ [m], $r_b = 0.5$ [m],
$M = 200$ [kg], $J = 12$ [kg m$^2$],

it follows that, after optimisation:

$\alpha = 0.202$,

whereby the total effective weighted force appears to be limited by an approximate factor 3.5 (5.5 dB thus) by addition of the balancing force.

Both examples are highly simplified and are only included for illustrative purposes. Generalisations to more dimensions with, in general, complex weighting-factors, different moments of inertia in different directions and unbalancing forces with phase-conservation leads to correction by means of several balancing forces at arbitrary points and in arbitrary directions, which leads to a further improvement of the present device for counterbalancing unbalancing forces and unbalancing moments.

**Claims**

1. Device for counterbalancing unbalancing forces and unbalancing moments caused by an internal combustion engine, which device, together with the internal combustion engine and a possible transmission coupled to the said internal combustion engine and further usual components such as an oil pump, carburetor, etc., can be suspended as a propulsion unit from chassis fixing-points, the said device containing balancing means characterised in that the mass and location of the balancing means are determined in such a manner that a fraction $\alpha$ of the unbalancing forces and unbalancing moments is compensated by the balancing means, the value of $\alpha$ being derived from a calculation of the minimum of the quadratic sum of the weighted pushing forces $F_{gi}$ exerted by the propulsion unit on the chassis fixing-points.

**2.** Device according to claim 1, characterised in that the balancing means are located either on the distributor-side or the transmission-side of the internal combustion engine.

**3.** Device according to claim 1 or 2, characterised in that the balancing means are principally located between the crankshaft and the camshaft on the distributor-side of the internal combustion engine.

**4.** Device according to one of the claims 1 - 3, characterised in that the balancing means are located on one side of the longitudinal plane passing through the crankshaft and the camshaft of the internal combustion engine.

**5.** Device according to one of the claims 1 - 4, characterised in that both the crankshaft and the camshaft of the internal combustion engine are provided with pulleys, around which pulleys a belt passes, the said belt being provided with two toothed sides which grip the balancing means.

**6.** Device according to one of the claims 1 - 5, characterised in that the balancing means and the crankshaft and/or camshaft are provided with a cog transmission for direct driving of the balancing means.

**7.** Device according to one of the claims 1 - 6, characterised in that the balancing means are embodied as balancing-wheels, balancing-cogs or balancing-shafts.

**8.** Device according to claim 7, characterised in that the balancing-shafts or balancing-wheels can be driven in pairs with an angular frequency which is twice as large as the angular frequency of the crankshaft.

**9.** Device according to claim 7 or 8, characterised in that the determination of the height-difference between the balancing-wheels is dependent on the minimal value of the total second-order moment.

**10.** Device according to one of the claims 1 - 9, characterised in that the camshaft is provided with a hollow pulley with internal toothing, the said hollow pulley being mounted on the distributor-side of the internal combustion engine and the said toothing being coupled to balancing means which are provided with pairs of balancing-cogs and which are mounted in bearings so as to be rotatable in the engine block of the internal combustion engine.

FIG. 1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 829 042 (VW)<br>* Page 7, line 7 - page 8, line 28; page 9, line 17 - page 10, line 4; figures 1,3 *<br>--- | 1-5,7-9 | F 16 F 15/26 |
| A | DE-A-2 629 529 (VW)<br>* page 7, line 30 - page 8, line 15; page 5, line 5 - page 6, line 26; figures 1-5 *<br>--- | 1-3,5,7,8,10 | |
| A | US-A-2 304 892 (DICKSON)<br>* Figures 2-6,8,9 *<br>--- | 6 | |
| A | DE-A-2 649 467 (VW)<br>* Page 5, line 19 - page 6, line 36; figures 1,2 *<br>--- | 1-3,5,7,8 | |
| A | EP-A-0 126 661 (NEGRE & ELF FRANCE)<br>* Figures 2,3 *<br>--- | 1-5,7-9 | |
| A | ATZ AUTOMOBILTECHNISCHE ZEITSCHRIFT, vol. 83, no. 11, November 1981, pages 583-590, Stuttgart, DE; R. VON SIVERS et al.: "Schwingungstechnisch-akustische Massnahmen bei der Entwicklung des Porsche 944-Motors"<br>* Page 584, left-hand column, line 15 - page 586, left-hand column, line 2; figures 2,3,8,9 *<br>----- | 1-3,5,7-9 | **TECHNICAL FIELDS SEARCHED (Int. Cl.5)**<br><br>F 16 F<br>F 02 B |

The present search report has been drawn up for all claims

| Place of search | Date of completion of the search | Examiner |
|---|---|---|
| THE HAGUE | 18-12-1991 | TORSIUS A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)